# EUROPÄISCHE PATENTSCHRIFT

(11) **EP 2 603 382 B1**
(45) Veröffentlichungstag und Bekanntmachung des Hinweises auf die Patenterteilung: **13.07.2016**
(21) Anmeldenummer: 11760685.5
(22) Anmeldetag: 15.07.2011
(51) Int. Cl.: B32B 37/24

(54) **VERFAHREN ZUR HERSTELLUNG EINER FOLIE FÜR EIN SICHERHEITS- UND/ODER WERTDOKUMENT**
METHOD FOR PRODUCING A FILM FOR A SECURITY DOCUMENT AND/OR VALUABLE DOCUMENT
PROCÉDÉ DE FABRICATION D'UNE FEUILLE POUR UN DOCUMENT DE SÉCURITÉ ET/OU DE VALEUR

(30) Priorität: 11.08.2010 DE 102010034039
(43) Veröffentlichungstag der Anmeldung: 19.06.2013
(73) Patentinhaber: Bundesdruckerei GmbH, 10958 Berlin (DE)
(72) Erfinder: KRÜGER, Per, 14197 Berlin (DE); MOMBRÉE, Alexander, 10829 Berlin (DE); SEIDEL, Rainer, 13467 Berlin (DE); EHREKE, Jens, 12587 Berlin (DE); GAHLBECK, Jeffry, 12437 Berlin (DE)
(74) Vertreter: Jungblut, Bernhard Jakob
(86) Internationale Anmeldenummer: PCT/DE2011/001465
(87) Internationale Veröffentlichungsnummer: WO 2012/019583

(56) Entgegenhaltungen:
- EP-B1- 1 030 892
- WO-A1-2008/125335
- US-A1- 2009 169 776

## Beschreibung

### Gebiet der Erfindung.

Die Erfindung betrifft ein Verfahren gemäß dem Oberbegriff des Anspruchs 1.

Stand der Technik und Hintergrund der Erfindung.

Overlayfolien werden u.a. im Bereich der Sicherheits- und/oder Wertdokumente eingesetzt. Sie dienen einerseits dem Schutz von Druckbildern oder Beschriftungen solcher Dokumente vor Abrieb oder vor unerwünschten Manipulationen. Sie werden auf ein Substrat, enthaltend eine oder mehrere Schichten aus polymeren Werkstoffen, Druckschichten, Sicherheitsmerkmale usw. aufgebracht, insbesondere mit dem Substrat laminiert oder aufgeklebt, und bilden die oberste Schicht eines solchen Dokumentes. Overlayfolien können selbst Sicherheitsmerkmale, wie eine Lasergavur und/oder diffraktive optische Elemente, beispielsweise Hologramme, oder brechende Elemente, beispielsweise Mikrolinsen, enthalten und dadurch die Sicherheit der Dokumente vor Manipulationen oder Nachahmungen erhöhen. Overlayfolien bestehe typischerweise aus einem Polycarbonatwerkstoff.

Insbesondere in Fällen, wo die Overlayfolie diffraktive optische Elemente oder brechende Elemente enthält, ist ein Schutz der im fertigen Dokument außenliegenden Oberfläche der Overlayfolie vor mechanischen Beschädigungen, insbesondere Kratzern, wünschenswert, da diffraktive optische Elemente oder brechende Elemente typischerweise Topographien der Oberfläche sind, beispielsweise durch Prägung hergestellt, deren optische Eigenschaften durch mechanische Beschädigungen verändert oder vernichtet werden. Solche mechanischen Beschädigungen können beispielsweise schon im Herstellungsprozess des Dokumentes entstehen, u.a. beim Auflaminieren der Overlayfolie, da dabei mit Druck gearbeitet wird, oder durch Transport und Lagerung. Ansonsten können mechanische Beschädigungen auch beim Gebrauch des fertigen Dokumentes durch einen Endbenutzer auftreten.

Aus der Praxis bekannte Overlayfolien, beispielsweise auf Basis von Polycarbonatpolymeren, weisen keinen Schutz vor mechanischen Beschädigungen auf. Zwar ist es aus der Praxis bekannt, einen Kratz- und Abriebschutz dadurch einzurichten, dass auf eine Overlayfolie eine Lackschicht aus einem relativ harten Lack aufgebracht wird, dies ist jedoch nicht sinnvoll bei Overlayfolien, deren Oberflächen Topographien, wie diffraktive optische Elemente oder Linsenstrukturen als brechende Elemente, aufweisen, weil der Lackauftrag zu einer Verfüllung der Vertiefungen der Topographien führen würde mit dem Ergebnis der Unbrauchbarmachung der Topographie in ihrer technischen, insbesondere optischen Funktion.

Aus anderen technologischen Bereichen, beispielsweise der Technologie der Lacke für Kraftfahrzeuge, sind polymere Bindemittelsysteme für harte und abriebfeste Lackschichten, insbesondere Klarlackdeckschichten vielfältig bekannt. Hierunter bilden Systeme eine Untergruppe, bei welcher zwei verschiedene Poylmerisationsreaktionen letztendlich zu der vernetzten Klebeverbindung führen, die sogenannten "Dual Cure" oder "Dual Mode" Lacke. Bei diesen Lacken erfolgt eine Vernetzung typischerweise in 2 Stufen, einer Strahlungsvernetzung, beispielsweise mittels UV, und einer anschließenden thermischen Vernetzung. Entsprechend sind die Grundpolymere aufgebaut, i.e. sie enthalten sowohl strahlungsvernetzbare als auch (meist katalytisch) thermisch vernetzbare reaktive Gruppen. Der Hintergrund dieser Technologien in der Lacktechnik ist, dass der Einsatz von nur strahlungsvernetzbaren Lacken unbefriedigend ist, da manche Bereiche des Substrats, beispielsweise einer Kfz-Karosserie, abgeschattet sein können mit der Folge, das in solchen Bereichen eine ausreichende Härtung nicht oder nicht in ausreichendem Umfang erfolgt. Dies wird mit den Dual Cure Lacken umgangen, da durch die anschließende thermische Vernetzung auch Bereiche gehärtet werden, die bei der UV-Härtung abgeschattet waren.

Ein Verfahren der eingangs genannten Art ist aus dem Dokument US 2009/169776 bekannt.

Technisches Problem der Erfindung.

Der Erfindung liegt das technische Problem zu Grunde, ein Verfahren zur Herstellung einer Overlayfolie anzugeben, deren Oberfläche eine erhöhte Härte und Abriebfestigkeit aufweist, wobei jedoch eventuell vorhandene Topographien erhalten bleiben. Der Erfindung liegt weiterhin das technische Problem zu Grunde, Overlayfolien mit einer Topographie und einer verbesserten Härte und Abriebfestigkeit der Oberfläche anzugeben.

Grundzüge der Erfindung und bevorzugte Ausführungsformen.

Zur Lösung dieses technischen Problems lehrt die Erfindung ein Verfahren gemäß Anspruch 1.

Der Kern der Erfindung besteht somit in dem Einsatz an sich bekannter Dual Cure bzw. Dual Mode Lacke und der zweistufigen Härtung. Die mit der Lackdeckschicht versehen Substratschicht ist nach der Trocknungs- bzw. ersten Vernetzungsverfahrensstufe tiefziehbar bzw. prägbar, weil der Lack aufgrund der noch nicht vollständigen Härtung noch flexibel bzw. biegefähig ist. Daher ist in dieser Zwischenstufe eine Einbringung einer Topographie in den Verbund aus Substratschicht und teilweise gehärteter Lackdeckschicht unschwer möglich, beispielsweise durch Prägung. Mit der zweiten Vernetzungsverfahrensstufe erhält dann die Lackdeckschicht ihre hohe Endhärte, die oberhalb der Härte des polymeren Werkstoffes der Substratschicht liegt. "Oberhalb" meint hierbei eine Endhärte, die um zumindest 5%, besser 10%, vorzugsweise 50%, über der Härte der Oberfläche der Substratschicht liegt, beispielsweise gemessen mittels Pendeldämpfung nach König (DIN 53157), wobei die Werte der Pendelhübe Basis für die angegebenen relativen Werte bilden, oder Prüfung der Mikrohärte nach DIN EN 6507.

Grundsätzlich sind im Rahmen der Erfindung die verschiedensten Dual Cure bzw. Dual Mode Lacke einsetzbar. So kann ein System eingesetzt werden, wobei die Stufe c) eine Trocknungsverfahrensstufe und die Stufe e) eine thermische Vernetzungsverfahrensstufe oder eine Strahlungsverfahrensstufe ist. Die Trocknungsverfahrensstufe bewirkt eine Verdunstung von enthaltenen organischen oder wässrigen Lösemitteln, ggf. auch eine Vorvernetzung durch Reaktion mit Luftbestandteile, insbesondere Wasserdampf. Für die thermische Vernetzung oder die Strahlungshärtung sind in dem Bindemittel-Polymer geeignete fachübliche reaktive Gruppen enthalten. Die Trocknungsverfahrensstufe wird typischerweise bei 20°C bis 100 °C über 1 bis 6000 Sekunden durchgeführt. Eine thermische Vernetzung wird typischerweise bei 50 bis 250 °C über 1 bis 6000 Sekunden durchgeführt. Eine Strahlungshärtung erfolgt typischerweise mit einer Exposition einer UV Dosis im Bereich 200 bis 5000 mJ/cm², einer Wellenlänge im Bereich 100 bis 450 nm und einer Dauer von 1 bis 6000 Sekunden.

Alternativ können die Stufen c) und e) jeweils eine thermische Vernetzungsverfahrensstufe sein. Dann wird das Bindemittel des Lackes thermisch vernetzbare reaktive Gruppen, ggf. gleiche oder verschiedene Katalysatoren, enthalten, wobei die thermische Vernetzung in den beiden verschiedenen Stufen entweder bei unterschiedlichen Temperaturen oder über unterschiedliche Dauern erfolgt. So kann die Stufe c) bei Temperaturen von 50 bis 200 °C über 1 bis 6000 Sekunden und die Stufe e) bei Temperaturen von 60 bis 300 °C über 1 bis 6000 Sekunden erfolgen, wobei zumindest einer der Werte in der Stufe e) zumindest um 10% höher als der entsprechende Wert der Stufe c) ist.

Weiterhin alternativ kann die Stufe c) eine thermische Vernetzungsverfahrensstufe und die Stufe e) eine Strahlungsverfahrensstufe sein, oder umgekehrt. Bezüglich der möglichen Parameter wird auf die vorstehenden Ausführungen verwiesen.

Wenn die Stufe e) eine thermische Vernetzungsverfahrensstufe ist, kann diese eine Laminierverfahrensstufe sein, in welcher die Folie mit einer oder mehreren anderen Folien aus einem organischen Polymerwerkstoff laminiert wird. Ansonsten kann nach einer der Stufen c) oder d) und vor der Stufe e) eine Laminierverfahrensstufe durchgeführt werden, in welcher die Folie mit einer oder mehreren anderen Folien aus einem organischen Polymerwerkstoff laminiert wird.

Als Dual Cure bzw. Dual Mode Lacke kommen grundsätzlich alle bekannten Lacke mit ausreichender Oberflächenhärte nach der Endhärtung in Frage. Hierzu wird lediglich beispielhaft auf folgende Publikationen verwiesen, in welchen verschiedene Systeme beschrieben sind. Gemäß den Literaturstellen WO2001/046286, WO2001/046285, WO2001/042329, WO2001/023453, WO2000/039183, EP1138710, EP1103572, EP1085065 und EP928800 sind Lacke beschrieben, in welchen eine Reaktion von Isocyanat-funktionalisierten Bindemittelbestandteilen mit hydroxyfunktionellen Komponenten erfolgt, die zu einer zusätzlichen Vernetzung führt. Setzt man hierbei freie Isocyanate ein, wie z. B. in WO2001/046286 beschrieben, so resultiert dies in einer 2K-Formulierung. Gemäß der Literaturstelle WO2001 /23453 werden z.B. extern blockierte Isocyanate verwendet. Die Verwendung von intern blockierten Isocyanaten (Uretdionen) in Dual Cure Systemen ist in der Literaturstelle WO 03/016376 beschrieben. Dort werden uretdionhaltigen Komponenten eingesetzt. Aus der Literaturstelle WO2009/077222 ist ein Dual Cure System bekannt, welches bereits nach der thermischen Härtung und vor der Strahlungshärtung eine klebfreie, flexible und chemikalienbeständige Beschichtung ergibt. Alle diese Literaturstellen sollen in Ihrer Gesamtheit in den Offenbarungsgehalt dieser Beschreibung eingeschlossen sein.

Lediglich beispielhaft wird ein bevorzugtes Dual Cure System folgend ausführlich beschrieben.

Es handelt sich um ein Beschichtungsmittel, welches ausgebildet ist als eine flüssige Zubereitung bestehend aus
a) 19,9 - 80 Gew.-% eines mit den Komponenten b), c) und d) copolymerisierbaren und von diesen verschiedenen ethylenisch ungesättigten Monomers ohne eine mit Epoxidgruppen reaktive funktionelle Gruppe, oder einer Mischung verschiedener solcher Monomere
b) 0,1 - 60,2 Gew.-% eines mit den Komponenten a), c) und d) copolymerisierbaren und von diesen verschiedenen ethylenisch ungesättigten Monomers mit zumindest einer mit Epoxidgruppen reaktiven funktionellen Gruppe, oder einer Mischung verschiedener solcher Monomere,
c) 0 - 30 Gew.-% eines mit den Komponenten a), b) und d) copolymerisierbaren und von diesen verschiedenen ethylenisch ungesättigten Monomers mit einer Alkyoxygruppe, oder einer Mischung aus verschiedenen solcher Monomere,
d) 0 - 5 Gew.-% eines mit den Komponenten a), b) und c) copolymerisierbaren und von diesen verschiedenen ethylenisch ungesättigten Monomers mit im Mittel zumindest zwei oder mehr als zwei mit Epoxidgruppen reaktiven funktionellen Gruppen, welches verschieden von der Komponente b) ist, oder einer Mischung aus verschiedenen solcher Monomere,
e) 19,9 - 80 Gew.-% eines Monomers mit im Mittel zumindest einer Epoxidgruppe, insbesondere mehr als einer, beispielsweise im Mittel zumindest zwei Epoxidgruppen, oder einer Mischung aus verschiedenen solcher Monomere,
f) 0 - 10 Gew.-% eines Photopolymerisationsinitiators oder mehrerer verschiedener Photopolymerisationsinitiators,
g) 0 - 10 Gew.-% eines Vernetzungskatalysators oder mehrerer verschiedener Vernetzungskatalysatoren, und
h) 0 - 15 Gew.-% Zusatzstoffe,
wobei die Summe der Komponenten a) bis h) stets 100 Gew.-% ergibt.

Dieses Beschichtungsmittel wird mit fachüblichen Mitteln, beispielsweise Begießen, Drucken oder Sprühen, als Überzug auf die Substratschicht aufgetragen.

Dann werden die Komponenten a) bis d) des wie vorstehend erhaltenen Überzugs durch Bestrahlung mit Licht in der Verfahrensstufe c) photopolymerisiert. Es wird sich empfehlen, dass dafür zumindest 0,01 Gew.-% der Komponente f) in der Zubereitung enthalten ist.

Die Komponente a) ist vorzugsweise ein (Meth-)Acrylat, vorzugsweise ein C1-C12-Alkyl-(meth-)acrylat, ein C1-C12-Aryl-(meth-)acrylat), oder ein C1-C12-Ar-alkyl-(meth-)acrylat, wobei die Alkylgruppe und/oder Arylgruppe substituiert oder nicht substituiert sein kann. Sie ist insbesondere ausgewählt ist aus der Gruppe bestehend aus "Methyl-, Ethyl-, Propyl-, Butyl-, Octyl-, Isobornyl-, 2-Ethyl-hexyl-(meth-)acrylat, Phenyl-(meth-)acrylat, Phenyl-C1-C8-alkyl- (meth-)acrylat und Mischungen solcher Monomere".

Die Komponente b) ist vorzugsweise eine (Meth-)Acrylsäure, substituiert oder nicht substituiert, ein C1-C12-Alkyl-(meth-)acrylat, ein C1-C12-Aryl-(meth-)-acrylat, oder ein C1-C12-Ar-alkyl-(meth-)acrylat, wobei die Alkylgruppe und/oder Arylgruppe mit zumindest einer mit Epoxidgruppen reaktiven Gruppe, insbesondere Hydroxylgruppe, Carboxylgruppe, Anhydridgruppe, Ketogruppe, oder Amingruppe (primär, sekundär oder tertiär), substituiert ist. Sie ist insbesondere ausgewählt ist aus "(Meth-)Acrylsäure, Hydroxyethyl-, Hydroxypropyl-, Hydroxybutyl-(meth-)-acrylat, Carboxyethyl-, Carboxypropyl-, Carboxybuthyl-(meth-)acrylat, und Mischungen solcher Monomere".

Die Komponente c) ist vorzugsweise ein methoxyliertes oder ethoxyliertes C1-C12-Alkyl-(meth-)acrylat, C1-C12-Aryl-(meth-)acrylat oder C1-C12-Ar-alkyl-(meth-)acrylat, wobei die Alkylgruppe und/oder Arylgruppe substituiert oder nicht substituiert sein kann. Sie ist insbesondere ausgewählt ist aus der Gruppe bestehend aus "methoxyliertes Phenyl-(meth-)acrylat, methoxyliertes Phenyl-Methyl-(meth-)Acrylat, methoxyliertes Phenyl-ethyl-(meth-)acrylat, methoxyliertes Phenyl-butyl-(meth-)acrylat, methoxyliertes Phenyl-hexyl-(meth-)acrylat, methoxyliertes Phenyl-octyl-(meth-)acrylat, ethoxyliertes Phenyl-(meth-)acrylat, ethoxyliertes Phenyl-methyl-(meth-)acrylat, ethoxyliertes Phenyl-ethyl-(meth-)acrylat, ethoxyliertes Phenyl-butyl-(meth-)Acrylat, ethoxyliertes Phenyl-hexyl-(meth-)acrylat, ethoxyliertes Phenyl-octyl-(meth-)acrylat, und Mischungen solcher Monomere".

Die Komponente d) ist vorzugsweise ein (Meth-)Acrylat, beispielsweise ein C1-C12-Alkyl-(meth-) acrylat, ein C1-C12-Aryl-(meth-)acrylat), oder ein C1-C12-Ar-alkyl-(meth-)acrylat ist, wobei die Alkylgruppe und/oder Arylgruppe mit zwei oder drei Gruppen, gleich oder verschieden, substituiert ist, welche mit Epoxidgruppen reaktiv sind. Bezüglich geeigneter Gruppen wird auf die Ausführungen zur Komponente b) verwiesen. Beispiele geeigneter Produkte sind SR-9003 und SR-415 der Fa. Sartomer sowie Laromer®-DPGDA und Laromer®-LR 8863 der Fa. BASF.

Der Begriff des (Meth-)Acrylates bezeichnet Ester der (Meth-)Acrylsäure. Weitere für die Komponenten a) bis d) einsetzbare Monomere sind beispielsweise der Literaturstelle Ullmann's Encyclopedia of Industrial Chemistry, Wiley-VCH Verlag GmbH & Co. KGaA, 2005, in den Kapiteln "Acrylic Acid and Derivatives" und "Methacrylic Acid and Derivatives" entnehmbar.

Die Komponente e) ist vorzugsweise ein Epoxidharz mit einem Molekulargewicht von zumindest 500 Da, vorzugsweise zumindest 1000 Da, insbesondere zumindest 2000 Da, bis zu 5000 Da und mehr. Der Begriff des "Monomers" der Komponente e) bezieht sich dann auf das gesamte Harzmolekül und nicht etwa auf Monomere, auf welchen das Harz basiert. Die Obergrenze des Molekulargewichtes ist lediglich dadurch bestimmt, dass das Epoxidharz in der eingesetzten Menge vollständig löslich in den anderen Komponenten ist. Es kommen grundsätzlich alle niedermolekulare sowie höhermolekulare Polymere in Frage, wobei sie zweckmäßigerweise im Mittel mehr als eine Epoxidgruppe pro Molekül enthalten. Bevorzugte Epoxide sind Polyglycidylether von cyclischen Polyphenolen, insbesondere von Bisphenol-A oder Bisphenol-F. Diese Polyepoxide können durch Veretherung eines Polyphenols mit einem Epihalogenhydrin oder einem Dihalogenhydrin, wie Epichlorhydrin oder Dichlorhydrin in Gegenwart von Alkali in an sich bekannter Weise hergestellt werden. Beispiele für Polyphenole sind: 2,2-Bis(4-hydroxyphenyl)propan, 1,1-Bis(4-hydroxyphenyl)ethan, 2-Methyl-1,1-bis(4-hydroxyphenyl)-propan, 2,2-Bis(4-hydroxy-3-tert.-butylphenyl)propan, Bis(2-hydroxynaphthyl)methan und 1,5-Dihydroxy-3-naphthalin. Beispiele für weitere cyclische Polyole sind cycloaliphatische Polyole, wie 1,2-Cyclohexandiol, 1,4-Cyclohexandiol, 1,2-Bis(hydroxymethyl)cyclohexan, 1,3-Bis(hydroxymethyl)cyclohexan, und hydriertes Bisphenol A. Darüber hinaus können oxyalkylierte Addukte, wie Ethylen- und Propylenoxidaddukte von diesen alicyclischen Polyolen und Polyphenolen verwendet werden. Weiterhin können als Epoxidharze eingesetzt werden: Polyglycidylether von mehrwertigen Alkoholen, wie beispielsweise Ethylenglykol, Diethylenglykol, Triethylenglykol, 1,2-Propylenglykol, 1,3-Propylenglykol, 1,4-Butylenglykol und 1,5-Pentandiol. Auch Epoxide, die man durch Epoxidierung einer olefinisch ungesättigten alicyclischen Verbindung erhält, sind als Epoxidharze einsetzbar. Derartige Epoxidharze schließen Diepoxide oder höhere Epoxide und deren Mischungen ein, die eine oder mehrere Monoepoxide enthalten. Diese Epoxide werden durch Epoxidierung von alicyclischen Olefinen erhalten, z.B. mit Sauerstoff und ausgewählten Metallkatalysatoren, mit Perverbindungen, wie beispielsweise Perbenzoesäure, mit Acetaldehydmonoperacetat, oder Peressigsäure. Beispiele für solche Epoxide sind 1,5-Diepoxycyclooctan und Isomere des Cyclopentadiendioxids. Ebenfalls eingesetzt werden können Epoxidharze, die durch partielle Epoxidierung von Polydienen und deren Copolymerisaten hergestellt sind. Beispiele sind teilepoxidiertes Polybutadien und Polyisopren. Weitere einsetzbare Epoxidharze sind Polygylcidylether von phenolischen Novolakharzen oder ähnlichen Phenolharzen. Geeignete Epoxidharze sind beispielsweise die unter folgenden Namen im Handel erhältlichen Produkte: Epon, Eponol, Eponex, Epi-Cure, Epikote (alle Resolution Performance Products), D.E.R., D.E.N., D.E.H., Derakane, E.R.L. (alle Dow Chemical), Araldite, Aralcast (beide Hunstman Advanced Materials), Epotuf (Reichhold Chemical), NPEL, NPES (beide Nan Ya), YD (Kukdo Chemical), Epiclon (Dainippon Ink & Chemical), Epotohto (Tohto Kasei), Epikote (Japan Epoxy Resin), Epilox (Leuna Harze), A.E.R. (Asahi Kasei), Eponik (Mitsui Chemical), Sumiepoxy (Sumimoto Chemical), Epotec (Thai Epoxy), Paphen (InChem), PEP (Pacific Epoxy Polymers), oder Erysis, Epalloy (CVC Speciality Chemicals).

Die Komponente e) ist zweckmäßigerweise in einer Mischung der Komponenten a) bis d) vollständig löslich. Hierzu können die Verhältnisse der Mengen der Komponenten a) bis d) einerseits und der Komponente e) andererseits entsprechend abgestimmt werden.

Die Komponente f) ist vorzugsweise ausgewählt aus der Gruppe bestehend aus "Benzophenone, wie Benzophenon, Benzoylbenzylsäure, 4-Phenylbenzophenon, Hydroxybenzophenon, Benzoin, Benzoin-C1-C4-alkyl-ether, wie Benzoin-ethyl-ether, Benzoin-isopropyl-ether, Benzoinbutyl-ether, Benzoin-isobutyl-ether, Acetophenon, Acetophenon-Derivate, Thioxanthone, Alkylanthraquinone, Phosphinoxide, oder eine Mischung solcher Substanzen". Geeignete Photoinitaitoren sind beispielsweise die unter folgenden Namen im Handel erhältlichen Produkte Darocure® und Irgacure® (beide Ciba).

Die Komponente g) ist vorzugsweise ausgewählt aus der Gruppe bestehend aus "2-Methylimidazol, Phenylimidazol, 2-Phenyl-4-methylimidazol, bis(2-ethyl-4-methylimidazol), 2-Phenyl-4-methyl-5-hydroxymethylimidazol, 2-Phenyl-4,5-dihydroxymethylimidazol, Triazin-additions-Imidazol, 2-Ethyl-4-methylimidazol, 2-Undecylimidazol, 1-Cyanoethyl-2-methylimidazol, 1-Cyanoethyl-2-phenylimidazol, 1-Cyanoethyl-2-ethyl-4-methylimidazol, 1-Aminoethyl-2-methylimidazol, 1-(Cyanoethylaminoethyl)-2-methylimidazol, 1-Cyanoethyl-2-phenyl-4,5-bis(cyanoethoxymethyl)imidazol, Epoxidaddukte, mikroverkapselte Vernetzungskatalysatoren, und Mischungen solcher Substanzen.

Die Komponente h) kann grundsätzlich alle in der Lackchemie bekannten Additive bzw. Mischungen von Additiven umfassen. Sie ist beispielsweise ausgewählt ist aus der Gruppe bestehend aus "Antischaummittel, Netzmittel, Oberfläche- und Rheologie-Additive, Trockner, Konservierungsmittel, Stabilisatoren, Korrosionsschutzmitteln, Farbstoffe, Pigmente mit einem Partikeldurchmesser kleiner als 5 µm, insbesondere kleiner als 2 µm, und Mischungen solcher Stoffe". Geeignete Vernetzungskatalysatoren sind beispielsweise die unter folgenden Namen im Handel erhältlichen Produkte. Antischaummittel: Byk-020, Byk-052 der Fa. Byk; Netzmittel: Baysilone der Fa. Bayer, Byk-306, Byk-310 der Fa. Byk; Konservierungsmittel: Borchers S1 der Fa. Borchers; Die Komponente h) ist vorzugsweise frei von nicht reaktiven organischen Lösemitteln. Weitere Additive sind beispielsweise in der Literaturstelle Ullmann's Encyclopedia of Industrial Chemistry, Wiley Verlag, elektronische Ausgabe 2006, in dem Kapitel "Paint Additives" beschrieben.

In Hinblick auf die mengenmäßigen Verhältnisse ist es bevorzugt, wenn die flüssige Zubereitung besteht aus: 30 - 80 Gew.-%, insbesondere 50 - 80 Gew.-% a), 0,1 - 40 Gew.-%, insbesondere 15 - 30 Gew.-% b), 0 - 15 Gew.-%, insbesondere 0,1 - 15 Gew.-% c), 0 - 1 Gew.-%, insbesondere 0,1 - 1,0 Gew.-% d), 30 - 80 Gew.-%, insbesondere 30 - 50 Gew.-% e), 0,1 - 6,0 Gew.-%, insbesondere 1,0 - 6,0 Gew.-% f), 0,1 - 3,0 Gew.%, insbesondere 0,5 - 3,0 Gew.-% g), 0,1 - 10,0 Gew.-%, insbesondere 0,1 - 5,0 Gew.-% h).

Die Chemie der Zusammenhänge einer erfindungsgemäß eingesetzten Zubereitung ist die folgende. Bei niedrigen Temperaturen reagieren die Epoxidgruppen der Komponente e) nicht mit den Epoxid-reaktiven Gruppen der ethylenisch ungesättigten Monomere, die solche Gruppen enthalten. Wird die Zubereitung mit Licht, insbesondere UV-Licht, ausreichender Bestrahlungsintensität bestrahlt, so copolymerisieren die Komponenten a) bis d) miteinander. Die insofern "getrocknete" Beschichtung enthält im Falle der Acrylatmonomere folglich Polyacrylatmoleküle mit Epoxid-reaktiven Gruppen und das Epoxidharz, wobei zwischen diesen beidem Molekülspezies (noch) keine nennenswerte Reaktion stattgefunden hat. Aufgrund der Polymerisation der Komponenten a) bis d) und der weitgehenden Abwesenheit von nicht-reaktiven Lösemitteln ist aus der flüssigen Zubereitung durch die Photopolymerisation der Acrylatmonomere ein fester Überzug bzw. eine feste Beschichtung entstanden. Wenn diese Beschichtung jedoch erhöhten Temperaturen ausgesetzt wird, findet die thermische Vernetzung unter Reaktion der Epoxid-reaktiven Gruppen der Polyacrylatmoleküle mit den Epoxidgruppen des Epoxidharzes statt.

Die Lackdeckschicht weist 24h nach Durchführung der Stufe e) zweckmäßigerweise eine Härte, gemessen durch Pendeldämpfung nach König (DIN 53157) von mehr als 30, insbesondere mehr als 80, auf. Dies ist unschwer durch Auswahl eines geeigneten Beschichtungsmittels einrichtbar.

Die Substratschicht weist vorzugsweise eine Dicke von 10 bis 150 µm, insbesondere von 30 bis 100 µm, auf. Die Lackdeckschicht weist vorzugsweise 24h nach Durchführung der Stufe e) eine Dicke im Bereich von 2 bis 50 µm, insbesondere von 3 bis 20 µm auf.

Die Topographie kann ein diffraktives optisches Element, vorzugsweise ein Prägehomogramm, oder ein brechendes Element, vorzugsweise ein Mikrolinsenraster, sein.

Die Erfindung betrifft desweiteren eine Folie erhältlich mit dem vorstehend beschriebenen erfindungsgemäßen Verfahren. Es handelt sich dabei um eine Folie mit einer Substratschicht aus einem polymeren Werkstoff, vorzugsweise Polycarbonat, und einer unmittelbar mit der Substratschicht verbundenen Lackdeckschicht, wobei die Lackdeckschicht eine Topographie, insbesondere ein diffraktives optisches Element oder ein brechendes Element, aufweist, und wobei die Lackdeckschicht eine Härte, gemessen durch Pendeldämpfung nach König (DIN 53157) von mehr als 30, insbesondere mehr als 80, aufweist.

Die Erfindung betrifft schließlich eine in einen Folienverbund integrierte erfindungsgemäße Folie. Ein solcher Folienverbund, insbesondere Sicherheits- und/oder Wertdokument, enthält eine Mehrzahl von miteinander laminierten Folien aus gleichen oder verschiedenen polymeren Werkstoffen sowie eine erfindungsgemäße Folie, wobei die Lackdeckschicht eine äußerste Schicht bildet. Der Begriff des Sicherheits- und/oder Wertdokumentes umfasst im Rahmen der Erfindung insbesondere Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Trägerschicht, eine Druckschicht und optional eine transparente Deckschicht und die erfindungsgemäße Overlayfolie auf. Eine Trägerschicht ist eine Trägerstruktur, auf welche eine Druckschicht oder mehrere Druckschichten mit Informationen, Bildern, Mustern und dergleichen aufgebracht werden. Als Materialien für eine Trägerschicht kommen alle fachüblichen Werkstoffe auf Papier- und/oder Kunststoffbasis in Frage, wobei die Trägerschicht ihrerseits wiederum aus verschiedenen Schichten gebildet sein kann.
- Beispiel 1:: Herstellung eines katalysierten Basissystems.

In einem 500-ml-Becherglas werden 60 g Epoxidharz auf Bisphenol-A-Basis (Epilox® A 50-02, Leuna Harze), 80 g Isobornylacrylat (IBOA, Cytec), und 30 g 2-Carboxyethylacrylat (Ebecryl® β-CEA, Cytec) gegeben und mit einem Propellerrührer (optional Dissolverscheibe) für 45 min bei Raumtemperatur innigst verrührt. 2 g 2-Ethyl-4-Methyl-imidazol (Dyhard®MI-C, Degussa) werden in 28 g Isobornylacrylat unter Rühren (Magnetrührer) gelöst und dieses Gemisch mit der Epoxidlösung vereinigt und für weitere 15 min gerührt. Man erhält ca. 200 g der Basismischung, welche für die weiteren Versuche bei Dunkelheit (braune Glasflasche) und Temperaturen < 5 °C gelagert wurde.
- Beispiel 2:: Herstellung einer anwendungsfertigen Zusammensetzung.

In einem 100-ml-Becherglas wurden 38 - 39 g Basismischung und 1 g Photoinitiator (Darocure 4265) und 1,0 g Katalysator 2-Ethyl-4-Methyl-imidazol für 90 min bei Raumtemperatur gemischt. Zur Homogenisierung genügte ein Magnetrührer. Man erhielt ein Material mit einer Viskosität von 300 - 700 mPa s, welches entweder direkt weiterverarbeitet oder bei Dunkelheit (braune Glasflasche) und Temperaturen < 5 °C gelagert wurde.
- Beispiel 3:: Verarbeitung der Zusammensetzung aus Beispiel 2.

Vor der ersten Vernetzungsverfahrensstufe wird die Zusammensetzung auf die Substratschicht, hier eine Polycarbonatfolie einer Dicke von 80 µm, auflackiert. Die erste Vernetzungsverfahrenstufe erfolgt dann durch Strahlenhärtung mittels eines Plextor UV 030 Trockners oder alternativ eines Beltron UV-IR Kombitrockners BE 20/II. Die Bestrahlungsintensitäten betragen von 200 - 600 mW/cm². Sodann wird mittels einer fachüblichen Prägevorrichtung ein Mikrolinsenraster auf die Seite mit der erhaltenen Lackbeschichtung aufgeprägt. Danach erfolgte ein Laminieren der erhaltenen beschichteten Substratschicht mit weiteren Schichten aus organischen polymeren Werkstoffen, beispielsweise aus Polycarbonat, und zwar bei Temperaturen > 140° C, Drücken > 2 bar und Zeiten von > 5 s. Zum Einsatz kommt beispielsweise ein Rollenlaminator. Man erhält ein fertiges Sicherheits- und/oder Wertdokument mit einer Oberfläche enthaltend das Mikrolinsenraster, wobei diese Oberfläche aufgrund der aufgebrachten Zusammensetzung eine gegenüber Polycarbonat erhöhte Härte und folglich verbesserten Kratz- und Abriebschutz. Je nach Wahl des Katalysators sowie dessen Menge ist es möglich, die Verklebezeit zu senken.
- Beispiel 4:: Herstellung eines Sicherheits- und/oder Wertdokumentes mit einem kommerziell erhältlichen Dual Cure Lack

Als Zusammensetzung für die Decklackschicht kommt das Produkt Norilux® DC-3 in Verbindung mit dem Härter Norilux ® DC (beide: Pröll KG, D-91781 Weißenburg) zum Einsatz. Zunächst werden DC-3 mit DC im Verhältnis 2:1 gemischt und durch Rühren homogenisiert. Die erhaltene Zubereitung wird auf die Substratschicht, hier eine Polycarbonatfolie einer Dicke von 80 µm, durch Begießen aufgebracht. Dann erfolgt die Trocknungsverfahrensstufe bei 70 °C mittels eines Jet-Trockners, wobei die erhaltenen Lösemittel verdunstet werden. Sodann wird mittels einer fachüblichen Prägevorrichtung ein Mikrolinsenraster auf die Seite mit der erhaltenen Lackbeschichtung aufgeprägt. Die zweite Vernetzungsverfahrensstufe erfolgt dann durch Strahlenhärtung mittels eines Künast UV-Integrators. Die Bestrahlungsintensitäten betragen von 1200 - 2000 mJ/cm². Danach erfolgt ein Laminieren der erhaltenen beschichteten Substratschicht mit weiteren Schichten aus organischen polymeren Werkstoffen, beispielsweise aus Polycarbonat, und zwar bei Temperaturen > 140° C, Drücken > 2 bar und Zeiten von > 5 s. Zum Einsatz kommt beispielsweise ein Rollenlaminator. Man erhält ein fertiges Sicherheits- und/oder Wertdokument mit einer Oberfläche enthaltend das Mikrolinsenraster, wobei diese Oberfläche aufgrund der aufgebrachten Zusammensetzung eine gegenüber Polycarbonat erhöhte Härte und folglich verbesserten Kratz- und Abriebschutz.

## Patentansprüche

1. Verfahren zur Herstellung einer Folie mit den folgenden Verfahrensstufen:
a) es wird eine Substratschicht aus einem organischen Polymerwerkstoff hergestellt,
b) auf die Substratschicht wird eine Lackdeckschicht aufgetragen, wobei die Lackdeckschicht ein vernetzbares Bindemittel enthält,
c) der Verbund aus Substratschicht und Lackdeckschicht wird einer Trocknungsverfahrensstufe und/oder einer ersten Vernetzungsverfahrensstufe unterworfen, und
d) optional erfolgt eine Prägeverfahrensstufe, in welcher eine Topographie in die Lackdeckschicht und optional in die Substratschicht eingeprägt wird,
e) anschließend an die Verfahrensstufe c) oder d) erfolgt eine zweite Vernetzungsverfahrensstufe, wobei die Lackdeckschicht in der zweiten Vernetzungsverfahrensstufe eine Endhärte erhält, welche oberhalb der Härte des polymeren Werkstoffes der Substratschicht liegt,
**dadurch gekennzeichnet,**
**dass** die Lackdeckschicht 24h nach Durchführung der Stufe e) eine Härte, gemessen durch Pendeldämpfung nach König (DIN 53157) von mehr als 30 aufweist.

2. Verfahren nach Anspruch 1, **dadurch gekennzeichnet, dass** die Lackdeckschicht ein Dual-Cure oder Dual-Mode Lack ist.

3. Verfahren nach Anspruch 1 oder 2, **dadurch gekennzeichnet, dass** die Stufe c) eine Trocknungsverfahrensstufe und die Stufe e) eine thermische Vernetzungsverfahrensstufe oder eine Strahlungsverfahrensstufe ist.

4. Verfahren nach Anspruch 1 oder 2, **dadurch gekennzeichnet, dass** die Stufen c) und e) jeweils eine thermische Vernetzungsverfahrensstufe sind.

5. Verfahren nach Anspruch 1 oder 2, **dadurch gekennzeichnet, dass** die Stufe c) eine thermische Vernetzungsverfahrensstufe und die Stufe e) eine Strahlungsverfahrensstufe ist, oder umgekehrt.

6. Verfahren nach einem der Ansprüche 1 bis 5, **dadurch gekennzeichnet, dass** die Stufe e) eine thermische Vernetzungsverfahrensstufe ist, in welcher die Folie mit einer oder mehreren anderen Folien aus einem organischen Polymerwerkstoff laminiert wird.

7. Verfahren nach einem der Ansprüche 1 bis 5, **dadurch gekennzeichnet, dass** nach einer der Stufen c) oder d) und vor der Stufe e), alternativ nach der Stufe e), eine Laminierverfahrensstufe durchgeführt wird, in welcher die Folie mit einer oder mehreren anderen Folien aus einem organischen Polymerwerkstoff laminiert wird.

8. Verfahren nach einem der Ansprüche 1 bis 7, **dadurch gekennzeichnet, dass** die Lackdeckschicht 24h nach Durchführung der Stufe e) eine Härte, gemessen durch Pendeldämpfung nach König (DIN 53157) von mehr als 80 aufweist.

9. Verfahren nach einem der Ansprüche 1 bis 8, **dadurch gekennzeichnet, dass** die Substratschicht eine Dicke von 10 bis 150 µm, insbesondere von 30 bis 100 µm, aufweist.

10. Verfahren nach einem der Ansprüche 1 bis 9, **dadurch gekennzeichnet, dass** die Lackdeckschicht 24h nach Durchführung der Stufe e) eine Dicke im Bereich von 2 bis 50 µm, insbesondere von 3 bis 20 µm aufweist.

11. Verfahren nach einem der Ansprüche 1 bis 10, **dadurch gekennzeichnet, dass** die Topographie ein diffraktives optisches Element oder ein brechendes Element, vorzugsweise ein Mikrolinsenraster, ist.

12. Folie erhältlich nach einem der Ansprüche 1 bis 11, mit einer Substratschicht aus einem polymeren Werkstoff, vorzugsweise Polycarbonat, und einer unmittelbar mit der Substratschicht verbundenen Lackdeckschicht, wobei die Lackdeckschicht eine Topographie, insbesondere ein diffraktives optisches Element oder ein brechendes Element, aufweist, **dadurch gekennzeichnet,**
**dass** die Lackdeckschicht eine Härte, gemessen durch Pendeldämpfung nach König (DIN 53157) von mehr als 30, insbesondere mehr als 80, aufweist.

13. Folie nach Anspruch 12, integriert in einen Folienverbund, insbesondere in ein Sicherheits- und/oder Wertdokument, enthaltend eine Mehrzahl von miteinander laminierten Folien aus gleichen oder verschiedenen polymeren Werkstoffen,
wobei die Lackdeckschicht eine äußerste Schicht bildet.

## Claims

1. A method for producing a film, comprising the following method steps:
a) a substrate layer is made of an organic polymeric material,
b) a paint cover layer is applied onto the substrate layer, the paint cover layer including a crosslinkable binding agent,
c) the composite of substrate layer and paint cover layer is subjected to a drying method step and/or a first crosslinking method step, and
d) optionally follows an embossing method step, in which a topography is embossed into the paint cover layer and optionally into the substrate layer,
e) subsequently to method step c) or d) follows a second crosslinking method step, the paint cover layer receiving, in the second crosslinking method step, a final hardness, which is above the hardness of the polymeric material of the substrate layer,
**characterized by** that
the paint cover layer has, 24 h after carrying-out step e), a hardness, measured by pendulum damping according to König (DIN 53157), of more than 30.

2. The method according to claim 1, **characterized by** that the paint cover layer is a dual-cure or dual-mode paint.

3. The method according to claim 1 or 2, **characterized by** that step c) is a drying method step and step e) is a thermal crosslinking method step or a radiation technology step.

4. The method according to claim 1 or 2, **characterized by** that steps c) and e) are thermal crosslinking method steps.

5. The method according to claim 1 or 2, **characterized by** that step c) is a thermal crosslinking method step and step e) is a radiation technology step, or vice versa.

6. The method according to one of claims 1 to 5, **characterized by** that step e) is a thermal crosslinking method step, in which the film is laminated with one or more other films of an organic polymeric material.

7. The method according to one of claims 1 to 5, **characterized by** that after one of steps c) or d) and before step e), alternatively after step e), a lamination method step is carried out, in which the film is laminated with one or more other films of an organic polymeric material.

8. The method according to one of claims 1 to 7, **characterized by** that the paint cover layer has, 24 h after carrying-out step e), a hardness, measured by pendulum damping according to König (DIN 53157), of more than 80.

9. The method according to one of claims 1 to 8, **characterized by** that the substrate layer has a thickness of 10 to 150 µm, in particular of 30 to 100 µm.

10. The method according to one of claims 1 to 9, **characterized by** that the paint cover layer has, 24 h after carrying-out step e), a thickness in the range from 2 to 50 µm, in particular from 3 to 20 µm.

11. The method according to one of claims 1 to 10, **characterized by** that the topography is a diffractive optical element or a refringent element, preferably a microlens array.

12. A film obtainable according to one of claims 1 to 11, comprising a substrate layer of a polymeric material, preferably polycarbonate, and a paint cover layer immediately connected to the substrate layer, the paint cover layer having a topography, in particular a diffractive optical element or a refringent element, **characterized by** that the paint cover layer has a hardness, measured by pendulum damping according to König (DIN 53157), of more than 30, in particular more than 80.

13. The film according to claim 12, integrated in a film composite, in particular in a security and/or value document including a plurality of mutually laminated films of identical or different polymeric materials, wherein the paint cover layer forms an outermost layer.

## Revendications

1. Procédé de fabrication d'une feuille, comprenant les étapes d'opération suivantes:
a) une couche de substrat est fabriquée en un matériau polymère organique,
b) une couche de vernis de couverture est appliquée sur la couche de substrat, la couche de vernis de couverture comportant un liant réticulable,
c) le composite de la couche de substrat et la couche de vernis de couverture est soumis à une étape d'opération de séchage et/ou une première étape d'opération de réticulation, et
d) éventuellement suit une étape d'opération de gaufrage, dans laquelle une topographie est gaufrée dans la couche de vernis de couverture et éventuellement dans la couche de substrat,
e) à la suite des étapes d'opération c) ou d) a lieu une deuxième étape d'opération de réticulation, la couche de vernis de couverture recevant, dans la deuxième étape d'opération de réticulation, une dureté finale, qui est supérieure à la dureté du matériau polymère de la couche de substrat,
**caractérisé en ce que**
la couche de vernis de couverture a, 24 h après la mise en oeuvre de l'étape e), une dureté, mesurée par amortissement pendulaire selon König (DIN 53157), supérieure à 30.

2. Procédé selon la revendication 1, **caractérisé en ce que** la couche de vernis de couverture est un vernis dual-cure ou dual-mode.

3. Procédé selon la revendication 1 ou 2, **caractérisé en ce que** l'étape c) est une étape d'opération de séchage et l'étape e) est une étape d'opération de réticulation thermique ou une étape de technologie d'irradiation.

4. Procédé selon la revendication 1 ou 2, **caractérisé en ce que** les étapes c) et e) sont des étapes d'opération de réticulation thermiques.

5. Procédé selon la revendication 1 ou 2, **caractérisé en ce que** l'étape c) est une étape d'opération de réticulation thermique et l'étape e) est une étape de technologie d'irradiation, ou vice-versa.

6. Procédé selon une des revendications 1 à 5, **caractérisé en ce que** l'étape e) est une étape d'opération de réticulation thermique, dans laquelle la feuille est stratifiée avec une ou plusieurs autres feuilles en un matériau polymère organique.

7. Procédé selon une des revendications 1 à 5, **caractérisé en ce qu'**après une des étapes c) ou d) et avant l'étape e), alternativement après l'étape e), une étape d'opération de lamination est mise en oeuvre, dans laquelle la feuille est stratifiée avec une ou plusieurs autres feuilles en un matériau polymère organique.

8. Procédé selon une des revendications 1 à 7, **caractérisé en ce que** la couche de vernis de couverture a, 24 h après la mise en oeuvre de l'étape e), une dureté, mesurée par amortissement pendulaire selon König (DIN 53157), supérieure à 80.

9. Procédé selon une des revendications 1 à 8, **caractérisé en ce que** la couche de substrat a une épaisseur de 10 à 150 µm, en particulier de 30 à 100 µm.

10. Procédé selon une des revendications 1 à 9, **caractérisé en ce que** la couche de vernis de couverture a, 24 h après la mise en oeuvre de l'étape e), une épaisseur comprise dans la gamme de 2 à 50 µm, en particulier de 3 à 20 µm.

11. Procédé selon une des revendications 1 à 10, **caractérisé en ce que** la topographie est un élément optique diffractif ou un élément dioptrique, de préférence un arrangement de microlentilles.

12. Feuille obtenable selon une des revendications 1 à 11, comprenant une couche de substrat en un matériau polymère, de préférence polycarbonate, et une couche de vernis de couverture immédiatement liée à la couche de substrat, la couche de vernis de couverture ayant une topographie, en particulier un élément optique diffractif ou un élément dioptrique, **caractérisée en ce que** la couche de vernis de couverture a une dureté, mesurée par amortissement pendulaire selon König (DIN 53157), supérieure à 30, en particulier supérieure à 80.

13. Feuille selon la revendication 12, intégrée dans un composite de feuilles, en particulier dans un document de sécurité et/ou de valeur comportant une pluralité de feuilles stratifiées entre eux en des matériaux polymères identiques ou différents, dans laquelle la couche de vernis de couverture forme une couche extrême.
